# FASCICULE DE BREVET EUROPEEN

(11) **EP 3 256 316 B1**
(45) Date de publication et mention de la délivrance du brevet: **24.05.2023**
(21) Numéro de dépôt: 16707868.2
(22) Date de dépôt: 04.02.2016
(51) Int. Cl.: B32B 27/06, A42B 3/06, B32B 3/08, B32B 3/20, B32B 3/26

(54) **MATÉRIAU COMPOSITE ET DISPOSITIFS DE PROTECTION ASSOCIÉS**
VERBUNDMATERIAL UND ZUGEHÖRIGE SCHUTZVORRICHTUNGEN
COMPOSITE MATERIAL AND ASSOCIATED PROTECTION DEVICES

(30) Priorité: 10.02.2015 FR 1551087
(43) Date de publication de la demande: 20.12.2017
(73) Titulaire: Diplosystem, FR-13012 Marseille (FR)
(72) Inventeur: COHEN, Serge, 13007 Marseille (FR); SILHOL, François, 13012 Marseille (FR)
(74) Mandataire: Brun, Philippe Alexandre Georges
(86) Numéro de dépôt international: PCT/FR2016/050241
(87) Numéro de publication internationale: WO 2016/128651

(56) Documents cités:
- EP-A2- 1 832 186
- EP-A2- 1 897 609
- GB-A- 2 497 345
- US-A1- 2012 204 327

## Description

L'invention concerne un matériau composite appliqué au domaine des dispositifs de protection. Ces derniers sont exploités pour tous types d'usage. Nous pouvons citer, préférentiellement mais non limitativement, les éléments de protection individuelle, tels que les casques de moto, de voiture ou de sport à risques, genouillères, protège-tibias, protèges-coudes, vestes dorsales, chaussures utilisées pour le parachutisme... etc. Ils constituent également des éléments de protection passive de moyens de locomotion, tels que les pare-chocs de voiture ou de camion, les barrières ou murs de sécurité dans les circuits de vitesse.

A titre d'exemple préféré mais non limitatif, le matériau composite conforme à l'invention sera considéré dans son application en tant qu'insert au sein d'un casque de moto.

Très vite lors de la démocratisation de la moto, la protection de la tête du conducteur de ladite moto et de son éventuel passager a été reconnue comme essentielle pour la sécurité dudit conducteur et de son éventuel passager. En effet, dans les années 1920, les conducteurs se limitaient au port de bonnet de toile ou de casques en cuir, ces derniers étant similaires à ceux que portaient les automobilistes de la même époque. L'expérience a rapidement montré que les besoins de protection étaient différents et que ceux des voyageurs à motos étaient cruciaux pour leur survie. Pour ces raisons, des casques de moto dits « modernes » ont été développés.

Un casque de moto a pour fonction première de protéger la tête des personnes prenant place sur une moto ou plus généralement un véhicule motorisé comportant deux roues, pour notamment éviter les traumatismes crâniens entraînant parfois des hémorragies cérébrales, en atténuant les chocs avec le sol ou tout obstacle présent sur la route en cas de chute, mais aussi à préserver lesdites personnes de l'éventuelle abrasion provoquée par le glissement sur la chaussée. Un tel casque permet également de protéger le conducteur et/ou passager de conditions climatiques intempestives, telles qu'à titre d'exemples non limitatifs le vent ou la pluie, ou de l'intrusion d'insectes. Il peut également comprendre des dispositifs accessoires ou complémentaires, tels que, de manière avantageuse mais non limitative, un dispositif de climatisation ou de chauffage, un dispositif sonore pour permettre l'écoute de la musique ou d'un compagnon de route.

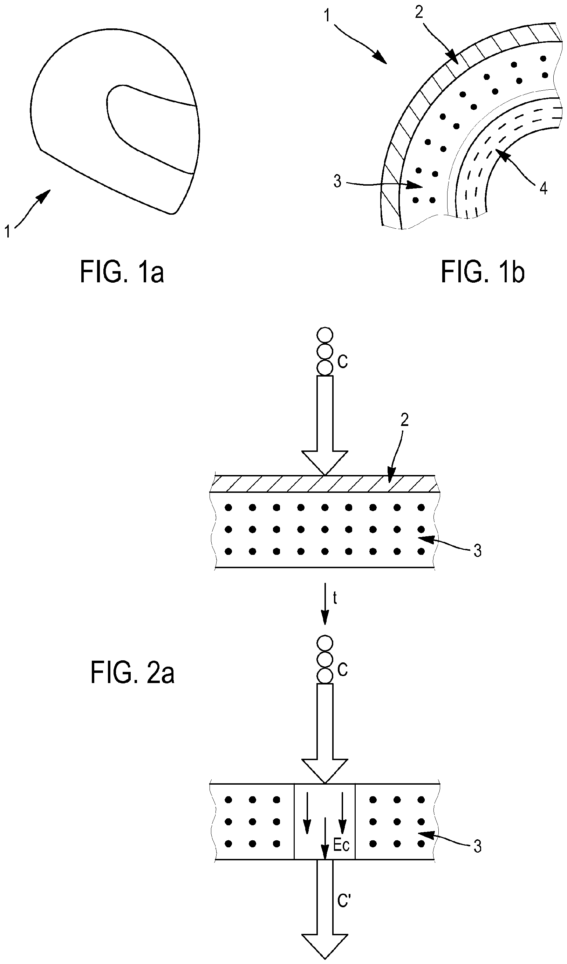

Les casques dits « modernes » sont globalement de conception similaire. Ils sont illustrés en liaison avec les figures 1a et 1b. De tels casques 1 sont avantageusement mais non limitativement composés de trois éléments principaux :
- une calotte ou coque externe 2 rigide ;
- une calotte ou coiffe interne 3 ;
- un rembourrage 4 de confort.

La protection donnée par le casque est assurée par l'absorption, au moyen dudit casque, d'une partie plus ou moins importante, voire de toute l'énergie cinétique générée par un impact asséné sur ledit casque. Dans tout le document, on entend par « impact », toute collision ou choc physique entre la tête du motard et le sol ou autres obstacles. Plus la quantité d'énergie absorbée par la déformation ou destruction du casque est importante, plus la tête du motard est protégée. Ainsi, la destruction partielle ou complète des casques intervient dans de nombreux cas lors de tels impacts. De ce fait, un changement de casque s'impose toujours après un accident ou impact, puisque l'intégrité du casque a été altérée par l'impact diminuant ainsi, voire annulant, la fonction « protectrice » dudit casque. En complément, afin de vérifier la conformité du casque, il est possible de coupler ledit casque à des moyens témoins de l'intégrité de ce dernier. À titre d'information, le document GB 2 497 345 A donne des exemples de dispositifs d'indicateur de dommages ainsi que les moyens d'activation associés pour une application, préférentiellement, sur des casques d'équitation.

Les trois éléments principaux ont chacun une fonction propre.

La coque externe 2 garantit une certaine résistance aux chocs mineurs, tels que, à titre d'exemples non limitatifs, une chute du casque sur le sol, une altercation, un heurt d'un objet acéré. Elle protège également le matériau de la calotte interne 3 de toute agression extérieure, comme par exemple l'humidité, les rayons UV, etc. Elle permet enfin de rendre les casques attrayants et amusants en permettant des variations esthétiques. Le matériau composant une telle coque externe 2 doit ainsi répondre à de nombreuses exigences : il doit en effet être solide, rigide et de faible masse. De manière avantageuse mais non limitative, une coque externe 2 peut être constituée de polycarbonate ou toute autre matière plastique équivalente, de matières composites ou fibres, telles que, à titre d'exemples non limitatifs, le poly(p-phénylènetéréhtalamide) (PPD-T), également connu sous la dénomination « Kevlar^{®} », la fibre de verre, la fibre de carbone ou des polymères de type polyéthylène de masse molaire très élevée (UHMPE), également connu sous la dénomination « Dyneema^{®} ».

La coiffe interne 3 assure majoritairement la fonction « protectrice » du casque. En effet, la coiffe interne 3 est conçue de manière à absorber l'énergie cinétique générée par tout impact ou tout choc. Elle doit toutefois présenter des dimensions raisonnables et une masse admissible pour un objet transportable. En outre, l'énergie cinétique transmise au travers du casque à la boîte crânienne doit être inférieure à une valeur critique, au-delà de laquelle survient un dommage majeur. En effet, lors d'un impact, les objets se déforment et se mettent en mouvement. C'est la transmission d'une quantité plus ou moins importante d'énergie qui entraîne des lésions cérébrales plus ou moins importantes. Ainsi, pour préserver l'intégrité de la boîte crânienne, une telle coiffe interne 3 est généralement composée de matériaux expansés, tels que, de manière non limitative, du polystyrène, du polypropylène ou autres.

Le rembourrage 4 permet de conférer un confort à l'utilisateur, en assurant un contact agréable entre la tête du passager et les autres composants du casque. De plus, un tel rembourrage 4 fournit d'autres propriétés, comme une résistance à l'humidité, une certaine texture ou odeur, ainsi qu'une protection contre le froid, contre le bruit du moteur ou les courants d'air. Ledit rembourrage 4 peut comprendre avantageusement une garniture en polystyrène habillé de tissus non irritants, parfois traités anti-allergie ou antibactérien.

La figure 2a illustre schématiquement le mode d'absorption d'un impact au sein d'un casque de moto dit « moderne ».

Un impact ou choc C a lieu avec le sol ou tout obstacle présent aux environs du casque. Ledit choc C est dirigé en général contre et/ou sur la coque externe 2 d'un casque de moto 1. Lorsque la coque externe 2 est construite en un matériau adapté pour fonctionner correctement, une portion de l'énergie cinétique induite par le choc C peut être déviée en « glissant » au-dessus de ladite coque externe 2 ou en ricochant sur le sol ou l'obstacle heurté. La coiffe interne 3, intacte au moment du choc C, absorbe tout ou partie de l'énergie cinétique E_{c} engendrée par le choc C. Cette absorption est assurée par la présence d'un matériau expansé, c'est-à-dire que le volume dudit matériau a préalablement été accru par injection d'un gaz. L'injection de gaz entraîne la création d'éléments de bases nommés cellules, qui, assemblés entre eux, forment le matériau. Les matériaux expansés sont des matériaux biphasiques composés d'un « squelette » en un matériau prédéfini et de gaz présent au sein des cellules. Cette augmentation de volume permet une meilleure répartition de l'énergie cinétique E_{c}, puisque la vitesse du choc C est diminuée au sein du matériau expansé. L'absorption de ladite énergie cinétique E_{c} est fonction du matériau expansé, par conséquent de la coiffe interne 3. À titre d'exemple, le document EP 1 832 186 A2 divulgue un matériau composite comprenant une matrice à base de polymère synthétique expansé.

Néanmoins, au sein des matériaux expansés, l'énergie cinétique E_{c} se propage suivant la même direction que l'onde de choc C (direction représentée par des flèches fines sur la figure 2a). Selon la violence de ce choc, l'énergie cinétique E_{c} n'est pas absorbée en totalité et une partie C' du choc est ainsi transmise à la tête du passager. Les traumatismes crâniens sont les dommages les plus souvent encourus lors de la chute d'un motard.

Face aux inconvénients que peuvent conférer les matériaux expansés couramment utilisés dans le commerce, d'autres matériaux ont été développés. Parmi ces matériaux, à titre d'exemple non limitatif, le D3o^{®} est fortement utilisé, notamment, de manière avantageuse mais non limitative, dans les protections passives du type blousons et gants adaptés pour les conducteurs et/ou passagers de deux roues. Le D3o^{®} est un fluide non-newtonien dilatant ou rhéoépaissisant, c'est-à-dire qu'il présente la particularité de changer de comportement mécanique selon qu'il est manipulé lentement ou rapidement, un exemple de fluide rhéoépaississant est donné dans le document EP 1 897 609 A2. Le D3o^{®} est considéré comme un matériau ou protection du type « active et intelligente », puisqu'il s'agit d'un matériau à mémoire de forme. En effet, à l'état de repos, c'est-à-dire lorsqu'il est manipulé lentement, le D3o a la propriété d'être malléable et/ou souple. Soumis à un choc, les molécules composant le D3o^{®} se lient ensemble pour permettre le durcissement ou la rigidification dudit matériau, permettant ainsi d'absorber et de disperser l'énergie cinétique engendrée par l'impact. A l'issue, le D3o^{®} recouvre son état de repos. Bien que le D3o^{®} possède d'indéniables qualités, il comporte également un certain nombre d'inconvénients. Du fait de ses propriétés particulières, le D3O dispose d'une faible résistance à l'abrasion. Il est ainsi nécessaire de le recouvrir d'un matériau protecteur, comme par exemple du carbone ou du plastique, permettant de conserver ses propriétés. Une telle protection supplémentaire engendre quelques inconvénients, puisqu'une partie de la malléabilité du produit est perdue, entraînant par la même occasion une diminution de l'absorption et/ou dispersion de l'énergie cinétique induite par un impact et finalement, une réduction du « pouvoir protecteur » du D3o^{®}.

De plus, d'autres types de matériaux, comme les matériaux nanocomposites, sont de plus en plus utilisés pour des dispositifs de protection. Pour exemple, le document US 2012/204327 A1 divulgue l'emploi de tels matériaux en lien préférentiellement avec la coiffe interne de casques de sécurité. Pour un tel dispositif de sécurité, le principe de dissipation de l'énergie cinétique repose sur l'assemblage d'une multitude de couches de matériau composite, présentant des particules de taille et de compositions différentes formant un réseau. Ces couches sont agencées pour dissiper de l'énergie cinétique induite par un impact au travers desdites particules et le long desdites couches.

L'invention permet de répondre à tout ou partie des inconvénients soulevés par les solutions connues.

Parmi les nombreux avantages apportés par un matériau composite selon l'invention, nous pouvons mentionner que celui-ci permet :
- de diminuer la propagation de l'énergie cinétique engendrée par un impact et par conséquent assurer une protection plus efficace contre les chocs ;
- de diffuser et amortir la propagation de l'énergie cinétique engendrée par un impact au sein dudit matériau composite ;
- de s'adapter à tout type de dispositifs de protection.

A cette fin, il est notamment prévu un matériau composite comportant une couche supérieure et une couche inférieure. Pour diminuer, voire supprimer, la portion d'énergie cinétique propagée et engendrée par un impact, et ainsi améliorer la protection contre ledit impact, le matériau composite selon l'invention comprend des moyens consistant en un réseau d'éléments de bases assemblés entre eux formant des cavités, lesdits éléments étant agencés pour rompre sous l'effet de l'énergie cinétique induite par un impact asséné sur l'une desdites couches, lesdits moyens coopérant de part et d'autre avec la couche supérieure et la couche inférieure.

Avantageusement, pour permettre la création d'une chambre étanche, la couche supérieure et la couche inférieure peuvent former une seule et même entité, enceignant les moyens pour diffuser.

De manière avantageuse mais non limitative, l'agencement du réseau d'éléments de base d'un matériau composite conforme à l'invention peut être régulier, les éléments de base étant identiques.

En variante, l'agencement du réseau d'éléments de base d'un matériau composite conforme à l'invention peut être aléatoire.

Afin de faciliter la déformation d'un matériau composite conforme à l'invention, le réseau d'éléments de base peut comporter au moins un bâtonnet.

En variante ou en complément, le réseau d'éléments de base peut comporter au moins une alvéole.

Afin de faciliter la fabrication d'un matériau composite selon l'invention, la couche supérieure, la couche inférieure et le réseau d'éléments de base peuvent être constitués en une même matière.

Pour augmenter la capacité de diffusion de tout ou partie de l'énergie cinétique au sein d'un matériau composite conforme à l'invention, les moyens pour diffuser peuvent comporter en outre un fluide s'écoulant au sein des cavités du réseau.

De manière préférée, le fluide peut être constitué principalement d'un gel.

Pour éviter tout phénomène d'écrasement et éviter l'endommagement, voire la destruction complète, d'un matériau composite conforme à l'invention, le fluide peut occuper trente à soixante pourcents de l'espace formé par les cavités du réseau.

Selon un deuxième objet, l'invention concerne un procédé de fabrication d'un matériau composite conforme à l'invention. Pour simplifier les procédés de fabrication et ainsi obtenir un gain de temps et une diminution des coûts, le procédé de fabrication d'un matériau composite conforme à l'invention comprend une étape d'extrusion du réseau d'éléments de bases et de cavités.

Selon un troisième objet, l'invention concerne un dispositif de protection, comprenant un insert. Pour diminuer la propagation de l'énergie cinétique engendrée par un choc et ainsi augmenter le pouvoir protecteur dudit dispositif, ledit insert est constitué en un matériau composite selon l'invention.

En complément, pour attester de la conformité d'un dispositif de protection selon l'invention, ce dernier peut en outre comprendre des moyens témoins de l'intégrité du matériau composite constituant l'insert.

Afin d'assurer un contrôle rapide d'un casque de moto selon l'invention, les moyens témoins peuvent comporter une valve de dépression associée à un moyen délivrant une indication perceptible par l'humain.

En variante ou en complément, afin d'assurer un contrôle détaillé et précis d'un dispositif de protection selon l'invention, les moyens témoins peuvent comporter une substance radio opaque.

Plus particulièrement, pour diminuer la propagation de l'énergie cinétique engendrée par un choc vers la tête d'un passager de deux roues, le dispositif de protection peut consister en un casque de moto, comportant une calotte externe, une coiffe interne positionnée entre ladite calotte externe et un rembourrage de confort. Pour diminuer la propagation de l'énergie cinétique engendrée par un choc vers la tête d'un passager de moto et ainsi augmenter le pouvoir protecteur dudit casque de moto, celui-ci peut comporter un insert constitué en un matériau composite selon l'invention, ledit insert étant positionné entre la calotte externe et la coiffe interne.

D'autres caractéristiques et avantages apparaîtront plus clairement à la lecture de la description qui suit et à l'examen des figures qui l'accompagnent parmi lesquelles :
- les figures 1a et 1b, précédemment décrites, illustrent des vues détaillées d'un casque de moto dit « moderne » connu ;
- la figure 2a, précédemment décrite, décrit un mode d'absorption d'un impact au sein d'un casque de moto dit « moderne » connu ;
- la figure 2b présente une description graphique d'un mode d'absorption d'un impact au sein d'un casque de moto conforme à l'invention ;
- les figures 3a et 3b décrivent des vues en coupe de deux modes de réalisation d'un matériau composite conforme à l'invention ;
- la figure 4 illustre une vue en coupe d'un mode de réalisation d'un casque de moto conforme à l'invention ;

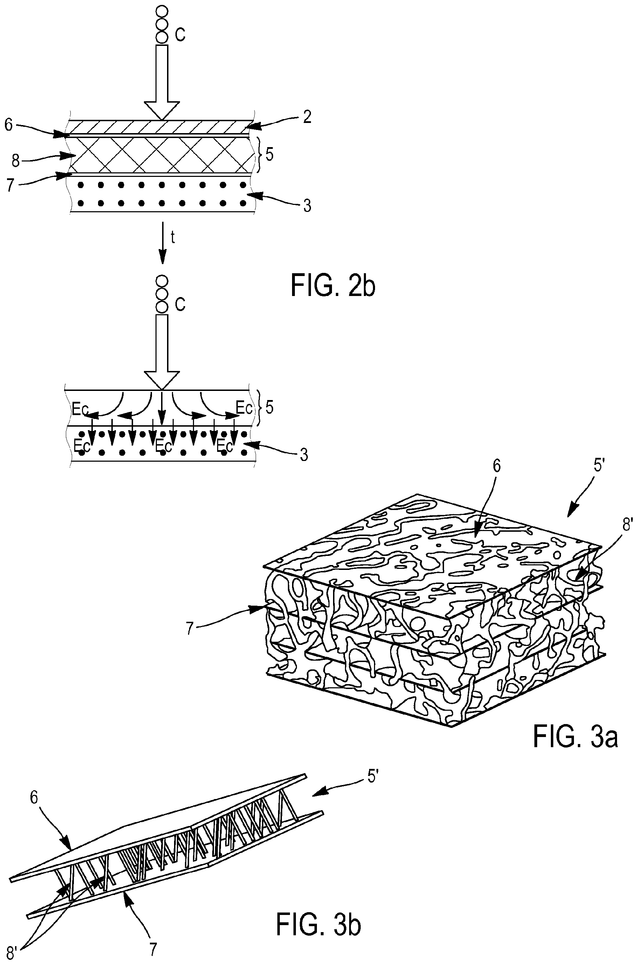

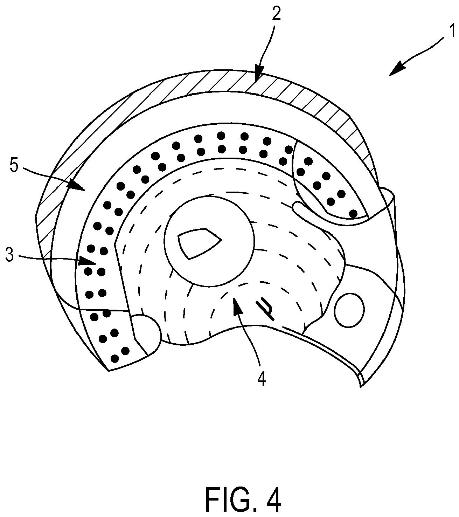

La figure 2b présente une description graphique de l'absorption d'un impact par un matériau composite selon l'invention, par exemple, au sein d'un casque de moto. Un tel casque de moto 1 est également décrit par la suite en liaison avec la figure 4.

A l'instar du mode d'absorption d'un impact décrit en liaison avec la figure 2a, un choc C a lieu avec le sol ou tout obstacle présent aux environs du casque. Ledit choc C est dirigé en général contre et/ou sur la coque externe 2 d'un casque de moto 1.

De manière analogue aux casques de moto modernes, un tel casque de moto 1 comporte avantageusement une calotte ou coque externe 2 rigide, une calotte ou coiffe interne 3, un rembourrage 4 de confort. Selon l'exemple décrit en liaison avec la figure 4, pour diminuer la propagation de l'énergie cinétique engendrée par un choc vers la tête d'un passager de moto et ainsi augmenter le pouvoir protecteur dudit casque de moto, celui-ci comporte un insert 5 constitué en un matériau composite selon l'invention, ledit insert 5 étant positionné entre la calotte externe 2 et la coiffe interne 3. On entend par « insert », tout objet ou pièce comportant un matériau composite selon l'invention, inclus au sein du casque de moto.

La coiffe interne 3 et l'insert 5, ce dernier étant avantageusement constitué avantageusement d'un matériau composite conforme à l'invention, sont intacts au moment du choc C. Pour protéger efficacement la tête, tout ou partie de l'énergie cinétique E_{c} engendrée par le choc C est avantageusement absorbée par la combinaison de l'insert 5 et la coiffe interne 3. A l'instar des casques dits modernes, la coiffe interne 3 est avantageusement constituée d'un matériau expansé, assurant l'absorption d'une partie de l'énergie cinétique. Toutefois, comme précisé précédemment, l'énergie cinétique E_{c} au sein des matériaux se propage suivant la même direction que l'onde de choc. Pour pallier à cet inconvénient, le casque de moto comprend un insert 5 avantageusement constitué d'un matériau composite 5' selon l'invention.

Un tel matériau composite 5' est également décrit en liaison avec les figures 3a et 3b, présentant deux modes de réalisation non limitatifs d'un matériau composite conforme à l'invention. On entend par « matériau composite » tout assemblage en phase solide composé d'au moins deux constituants dont les qualités respectives se complètent pour former un matériau aux performances globales améliorées : les deux constituants ont avantageusement une forte capacité d'adhésion. En principe, ledit matériau composite est constitué d'au moins deux composants : une matrice, assurant la cohésion du matériau et la transmission des efforts mécaniques, un renfort servant d'armature pour assurer tout ou partie des efforts mécaniques, et éventuellement un ou plusieurs additifs, permettant de modifier et/ou améliorer les propriétés physico-chimiques du matériau. Le renfort peut avantageusement être au sein d'une matrice ou associé à un renfort de nature différente. Un tel matériau comporte une couche supérieure 6 et une couche inférieure 7. De telles couches supérieure 6 et inférieure 7 permettent de créer une cohésion et une protection de la structure du matériau composite. Pour diminuer, voire supprimer, une portion d'énergie cinétique propagée et engendrée par un impact ou choc C, le matériau composite selon l'invention comprend des moyens 8 agencés pour diffuser sensiblement transversalement au moins une partie de l'énergie cinétique E_{c} induite par un impact asséné sur l'une desdites couches, lesdits moyens 8 coopérant de part et d'autre avec la couche supérieure 6 et la couche inférieure 7. L'énergie cinétique E_{c} est ainsi propagée au sein desdits moyens, dans toutes les directions, avantageusement perpendiculairement à la direction de l'onde de choc, comme décrit en liaison avec la figure 2b. En conséquence, l'onde de choc C, puisque diffusée, est amortie progressivement au sein desdits moyens, permettant ainsi une diminution importante de l'énergie cinétique propagée vers la tête d'un passager. In fine, l'onde de choc C entraîne la rupture et/ou la destruction partielle ou totale des moyens 8. Un tel matériau composite conforme à l'invention permet d'absorber aux environs de trente-cinq à quarante pourcents supplémentaires par rapport aux solutions usuelles de protection. Les limites des zones de danger sont ainsi fortement repoussées et le nombre de séquelles cérébrales est finalement diminué de façon significative lors l'utilisation d'un matériau composite conforme à l'invention en tant qu'insert 5 au sein des casques de moto 1.

De manière préférée, les moyens agencés pour diffuser peuvent consister en un réseau 8' d'éléments de base assemblés entre eux et de cavités, lesdites cavités étant également connus sous le nom d'interstices, formant une structure tridimensionnelle. Les éléments de base sont avantageusement composés d'une matrice dans un matériau adapté, ladite matrice étant arrangée en un lacis d'arêtes, également connues sous la terminologie de poutres, et éventuellement de cloisons, lesdites arêtes et cloisons formant les éléments de base et interagissant avec des interstices, permettant de former ensemble des structures bidimensionnelles ou tridimensionnelles. Les cavités ou interstices sont avantageusement emplies d'air. Un tel réseau 8' est avantageusement caractérisé par une densité particulière : en effet, par opposition avec un matériau dense constitué du même composant, le réseau possède une densité beaucoup plus faible pour un même volume, cette différence notable étant expliqué par la présence de nombreuses cavités au sein du réseau. A titre d'exemples non limitatifs, en considérant que les cavités ou interstices ont sensiblement une section circulaire ou elliptique, le diamètre de la section desdites cavités peut être de l'ordre de dix micromètres à trois millimètres, cette dimension étant dépendante de l'emploi d'un matériau 5' conforme à l'invention et de la quantité d'énergie cinétique E_{c} minimale à absorber. Préférentiellement, un tel diamètre peut être de l'ordre de cent à cinq cent micromètres. A titre d'exemples préférés mais non limitatifs, l'épaisseur totale du matériau composite peut être de l'ordre de 5 à 50 millimètres. Du fait de son architecture particulière, ledit réseau 8' possède des propriétés mécaniques particulièrement intéressantes notamment en compression, lui permettant de « dissiper » et/ou absorber pour un niveau de contrainte équivalent une quantité d'énergie cinétique E_{c} nettement supérieure par rapport au matériau dense équivalent. De telles propriétés mécaniques sont consécutives d'un comportement mécanique particulier lorsque ledit réseau, et par voie de conséquence le matériau composite 5' conforme à l'invention, est soumis à des efforts mécaniques, et notamment des efforts en compression entraînant par la suite la rupture, voire la destruction, partielle ou totale du réseau 8' d'éléments. Un tel comportement mécanique se décompose en trois phases principales :
- une première phase de chargement élastique après l'application d'un premier seuil de contrainte mécanique, entraînant une déformation homogène de l'architecture ;
- une deuxième phase après le passage d'un seuil dit de plasticité, ledit seuil attestant de la limite de l'élasticité du matériau, constituant un plateau d'endommagement et d'effondrement par la formation de rotules plastiques ;
- une troisième phase dite de densification, comprenant une compaction et un écrasement de toutes les cavités pour finalement entraîner la destruction partielle ou totale des éléments de bases composant le réseau.

L'architecture du réseau 8' d'éléments de base se déforme ainsi de manière homogène jusqu'à un certain pourcentage de déformation. Passé ledit pourcentage de déformation, les éléments de bases se déplacent plus fortement dans les zones proches de la couche supérieure que celles proches de la couche inférieure, présentant ainsi les zones d'endommagement dudit réseau. Lesdites zones d'endommagement sont ainsi précurseurs de la formation de plans de cisaillement localisés. On entend par « cisaillement » l'effet d'une force appliquée perpendiculairement à l'axe d'un élément de base. Si l'on considère que l'élément de base est de forme carrée, le phénomène de cisaillement crée une déformation du carré en parallélogramme résultant de l'application d'une force sur ledit carré. L'apparition de tels plans de cisaillement permet de dissiper au moins une partie de l'énergie cinétique au sein dudit réseau 8' d'éléments de base. Tout ou partie des éléments de base peuvent par la suite opérer une rupture de leur structure, permettant la diffusion de l'énergie cinétique E_{c} au sein du réseau 8'.

Deux exemples de modes de réalisation de tels réseaux sont décrits en liaison avec les figures 3a et 3b.

De manière avantageuse, le réseau 8' d'éléments de base d'un matériau composite 5' conforme à l'invention peut être régulier, les éléments de base étant identiques. On qualifie également un tel réseau de réseau ordonné. Une telle configuration permet de faciliter la fabrication du réseau et d'en diminuer les coûts. Ledit réseau 8' peut ainsi être composé d'éléments de base, sans orientation préférentielle, répartis de manière homogène. Les éléments de bases peuvent en variante être identiques et orientés de la même façon. Selon cette configuration particulière, les cavités ou interstices peuvent ainsi, de manière avantageuse, posséder une forme sensiblement proche d'une pseudo-sphère. En conséquence, un matériau composite 5' conforme à l'invention peut être qualifié de « matériau isotrope », puisqu'un tel réseau 8' ne possède pas d'orientation préférentielle et que par voie de conséquence, les propriétés mécaniques ne sont pas dépendantes de l'orientation des éléments de base. Comme décrit précédemment, lors de l'application d'une force de compression, des plans de cisaillement sont formés. De tels plans de cisaillement s'établissent aléatoirement puisque le réseau d'éléments de base est considéré comme régulier, les éléments de base étant identiques et sans orientation préférentielle. Comme précisé précédemment, l'apparition de tels plans de cisaillement permet de dissiper au moins une partie de l'énergie cinétique au sein dudit réseau 8' d'éléments de base. Tout ou partie des éléments de base peuvent par la suite opérer une rupture de leur structure et finalement entraîner la destruction de ladite structure, permettant la diffusion de l'énergie cinétique E_{c} au sein du réseau 8' .

En variante, de manière préférée mais non limitative, comme décrit en liaison avec les figures 3a et 3b, le réseau 8' d'éléments de base d'un matériau composite 5' conforme à l'invention peut être aléatoire. On qualifie également un tel réseau de réseau désordonné. Un tel réseau 8' possède une structure non régulière. Au sein dudit réseau, les éléments de base peuvent être différents. En variante ou en complément, ils peuvent être répartis aléatoirement et posséder une orientation particulière. Selon cette configuration particulière, les cavités ou interstices peuvent ainsi, de manière avantageuse, posséder une forme sensiblement proche d'un ellipsoïde. En conséquence, un matériau composite conforme à l'invention peut être qualifié de « matériau anisotrope », puisque les éléments de base d'un tel réseau peuvent posséder une orientation préférentielle et que par voie de conséquence, les propriétés mécaniques peuvent être dépendantes de l'orientation. Comme décrit précédemment, lors de l'application d'une force de compression, des plans de cisaillement sont formés. De tels plans de cisaillement s'établissent en principe au niveau des zones de plus faibles sections ou plus spécifiquement dans des zones de faible densité, indépendamment de la forme des éléments de base. Comme d'ores et déjà précisé, l'apparition de tels plans de cisaillement permet de dissiper au moins une partie de l'énergie cinétique au sein dudit réseau 8' d'éléments de base. Tout ou partie des éléments de base peuvent par la suite opérer une rupture de leur structure et finalement entraîner la destruction de ladite structure, permettant la diffusion de l'énergie cinétique E_{c} au sein du réseau 8' .

Afin de faciliter la déformation d'un matériau composite conforme à l'invention, comme décrit en liaison avec la figure 3b, le réseau d'éléments de base peut comporter un ou plusieurs bâtonnets. En variante ou en complément, le réseau d'éléments de base peut comporter au moins une alvéole. Lorsque le réseau d'éléments de base comporte au moins une alvéole, différents types d'éléments de base peuvent être employés, tels qu'à titre d'exemples non limitatifs, un tétraèdre, un prisme triangulaire, hexagonal ou rectangulaire, octaèdre...etc. Quels que soient la forme ou le type d'éléments de base employé, l'invention prévoit, préférentiellement mais non limitativement, que les cavités et éléments de base peuvent occuper respectivement chacun cinquante pourcents du volume global que possède le réseau d'un matériau composite conforme à l'invention. Alternativement mais non limitativement, le réseau 8' d'éléments d'un matériau composite selon l'invention peut avantageusement comporter une structure en nid d'abeille, éventuellement à trois niveaux. En variante, de manière avantageuse mais non limitative, le réseau 8' d'éléments d'un matériau composite selon l'invention peut comporter un assemblage de sphères de différentes dimensions.

En outre, la couche supérieure 6, la couche inférieure 7 et le réseau 8' d'éléments de base peuvent être constitués en une même matière. L'utilisation d'une matière identique pour constituer le matériau composite 5' permet de simplifier les procédés de fabrication et par conséquent diminuer les temps et coûts de fabrication. Une telle matière doit avantageusement être constituée pour assurer le comportement mécanique nécessaire à la diffusion sensiblement transversale de tout ou partie de l'énergie cinétique au sein du réseau d'éléments de base. Soumise à une déformation plastique importante, une telle matière doit permettre la rupture, voire même la destruction, partielle ou totale des éléments de base composant le réseau 8'. A titre d'exemples non limitatifs, une telle matière peut avantageusement comprendre un mélange d'un ou plusieurs polymères synthétiques, tels que les polyesters aliphatiques, notamment l'acide poly-L-lactique, le polycaprolactone, le polyisocyanide, le polymethylacrylate ou polycarbonate...etc, ou encore des polyamides naturels et/ou chargés éventuellement en verre ou en aluminium. Le matériau composite peut éventuellement être constitué d'une mousse en polyuréthane, éventuellement de type PORON ou d'un gel en silicone. De manière préférée non limitative, au moins le réseau 8' d'éléments de base peut être composée d'un tel mélange. L'utilisation de métaux et/ou de céramique en combinaison avec de tels polymères synthétiques peut également être envisagée. En outre, plusieurs additifs, charges ou fibres peuvent être ajoutés audit mélange. Un matériau composite conforme à l'invention ne saurait être limité à la ou les matières qui le composent.

Avantageusement, la couche supérieure 6 et la couche inférieure 7 peuvent former une seule et même entité, enceignant les moyens pour diffuser l'énergie cinétique E_{c}, et plus particulièrement le réseau 8' d'éléments de base. Les couches supérieure et inférieure forment ainsi une seule et même enveloppe, permettant ainsi de faciliter la fabrication d'inserts pour différents dispositifs de protection en permettant la formation d'une chambre étanche. Une telle chambre assure une fonction d'étanchéité lorsqu'elle empêche le passage de tout fluide vers l'extérieur. De manière préférée mais non limitative, l'étanchéité assurée par les couches supérieure 6 et inférieure 7 peut être double et statique, c'est-à-dire que ladite étanchéité est assurée de l'intérieur vers l'extérieur de la chambre et inversement.

Pour augmenter la capacité de diffusion de tout ou partie de l'énergie cinétique au sein d'un matériau composite conforme à l'invention, les moyens 8 pour diffuser peuvent comporter en outre un fluide s'écoulant au sein des cavités du réseau. Dans tout le document, on entend par « fluide » tout milieu matériel déformable composé principalement de liquide. L'invention ne saurait être limité aux liquides ou gaz « purs ». Elle peut également comprendre tout liquide comportant des billes ou particules microscopiques ou macroscopiques. De manière préférée mais non limitative, les fluides peuvent être avantageusement non newtoniens, puisque de tels fluides sont soumis aux phénomènes de cisaillement. En effet, par opposition, les fluides newtoniens, cette catégorie regroupant principalement l'eau, l'air et certaines huiles, ne sont pas soumis au phénomène de cisaillement. L'invention prévoit avantageusement que le fluide puisse être compatible avec les éléments de base constituant les moyens 8 pour diffuser. On entend par « fluide compatible » tout fluide étant inerte chimiquement, c'est-à-dire ne réagissant pas avec la matière composant les éléments de base. Préférentiellement mais non limitativement, le fluide peut avoir la propriété d'être rhéo-épaississant, c'est-à-dire que la viscosité dudit fluide augmente lorsque ce dernier est cisaillé, permettant une meilleure absorption de l'énergie cinétique. Par ailleurs, lorsque le réseau d'éléments de base est aléatoire, la diffusion du fluide devient dès lors asymétrique, permettant ainsi une meilleure diffusion de tout ou partie de l'énergie cinétique induite par un choc.

En variante, de manière avantageuse mais non limitative, le fluide peut être constitué principalement d'un gel. On entend par « gel » un lacis tri-dimensionnel de solides, avantageusement sous la forme de polymères, solubilisé au sein d'une substance fluidique. Une telle substance fluidique peut avantageusement être liquide ou gazeuse. Un tel gel a également la particularité de ne présenter aucun écoulement à l'état stable. Préférentiellement mais non limitativement, un tel gel peut être avantageusement un hydrogel, c'est-à-dire que la substance permettant la solubilisation peut être avantageusement de l'eau.

En complément, le fluide peut occuper, préférentiellement mais non limitativement, trente à soixante pourcents de l'espace formé par les cavités du réseau. De telles proportions permettent en principe d'éviter tout phénomène d'écrasement et d'empêcher l'endommagement, voire la destruction complète, d'un matériau composite conforme à l'invention tout en augmentant le pouvoir absorbant en énergie cinétique dudit matériau. En effet, au dessus d'un tel seuil de soixante pourcents, le fluide, par son occupation de l'espace formé par les cavités, peut engendrer des phénomène et effet d'écrasement, ces phénomène et effet empêchant le développement de plans de cisaillement et par voie de conséquence, engendrant une compression du fluide au sein des cavités pour finalement entraîner une destruction par explosion d'un matériau composite conforme à l'invention. En dessous du seuil de trente pourcents, le fluide ne garantit pas de réel impact sur l'absorption et/ou la dissipation de l'énergie cinétique par l'ajout d'un tel fluide.

En outre, l'invention concerne un procédé de fabrication d'un matériau composite conforme à l'invention. Pour simplifier les procédés de fabrication et ainsi obtenir un gain de temps et une diminution des coûts, le procédé de fabrication d'un matériau composite conforme à l'invention comprend une étape d'extrusion du réseau d'éléments de bases et de cavités. L'extrusion est un procédé de fabrication de matériau couramment utilisé dans le domaine des matériaux composites et particulièrement adaptée à la fabrication de réseau aléatoire. Dans le cas d'un matériau composite conforme à l'invention, l'étape d'extrusion consiste principalement à :
- dans un premier temps, faire fondre la ou les substances composant le réseau ;
- dans un deuxième temps, ajouter à la ou les substances fondues un agent d'expansion adapté et compatible, tel qu'à titre d'exemple non limitatif, l'isobutane ;
- dans un troisième temps, faire passer la ou les substances au sein d'une filière ou encore plus communément appelée extrudeuse.
Afin de permettre la création des cavités au sein du réseau, la température peut avantageusement mais non limitativement être supérieure à la température d'ébullition dudit agent d'expansion.

Toutefois, l'invention ne saurait être limitée à cette seule méthode. En variante, le réseau d'éléments de base peut avantageusement être fabriqué en employant d'autres procédés, tels que, à titre d'exemples non limitatifs, un moulage par injection, un thermoformage, etc., lesdits procédés permettant la formation de réseau d'éléments de base régulier. A titre d'exemples non limitatifs, de tels procédés peuvent éventuellement comporter des étapes de frittage de poudre.

Par ailleurs, l'invention concerne un dispositif de protection, comprenant un insert. Pour diminuer la propagation de l'énergie cinétique engendrée par un choc et ainsi augmenter le pouvoir protecteur dudit dispositif, ledit insert est constitué en un matériau composite conforme à l'invention. Un tel insert peut être avantageusement positionné au sein du dispositif de protection, seul ou en combinaison avec d'autres inserts assurant également des fonctions d'absorption, diffusion ou dispersion de tout ou partie de l'énergie cinétique induite par un choc. En variante ou en complément, il peut également être placé sur les éventuelles parois ou cloisons d'un dispositif de protection.

Plus particulièrement, l'invention concerne un casque de moto. Un tel casque peut éventuellement être adapté pour être utilisé en lien avec tout type de véhicules, tel qu'à titre d'exemples non limitatifs, une voiture de course, un karting, un scooter, un quad ou tout autre véhicule nécessitant le port d'un casque.

La figure 4 présente un mode de réalisation d'un casque de moto 1 conforme à l'invention.

Comme précisé précédemment, à l'instar des casques de moto dits classiques, un casque de moto 1 conforme à l'invention comporte une calotte ou coque externe 2, permettant une résistance aux chocs mineurs mais également la customisation dudit casque, une coiffe interne 3 positionnée entre ladite calotte externe, ladite coiffe étant conçue pour absorber au moins une partie de l'énergie cinétique induite par un choc, et un rembourrage de confort 4, permettant un contact amélioré entre la tête de l'utilisateur et les autres composants du casque. Bien qu'assurant la fonction protectrice, les casques dits classiques ne sont pas suffisants. Pour diminuer la propagation de l'énergie cinétique engendrée par un choc vers la tête d'un passager de moto et ainsi augmenter le pouvoir protecteur dudit casque de moto 1, celui-ci comporte un insert 5 constitué en un matériau composite selon l'invention, ledit insert étant généralement positionné entre la calotte externe 2 et la coiffe interne 3. En complément, ledit insert 5 peut également et avantageusement comporter une chambre étanche enceignant ledit matériau.

La combinaison de la coiffe interne 3 et de l'insert 5 garantit ainsi une diminution importante de la quantité d'énergie cinétique transmise vers l'utilisateur, de l'ordre de trente à trente-cinq pourcents supplémentaires par rapport aux casques dits classiques, permet de repousser la limite de zone de danger considérablement et ainsi de prémunir un nombre important d'utilisateurs de séquelles cérébrales. En variante, il pourrait également être prévu que l'insert 5 soit placé entre la coiffe interne 3 et le rembourrage de confort 4 : l'invention ne saurait être limitée au positionnement d'un tel insert 5 au sein d'un casque de moto 1 conforme à l'invention par rapport aux autres éléments composant ledit casque.

En outre, l'insert 5, au regard des autres éléments d'un casque, peut avoir des dimensions différentes selon l'utilisation pour lequel ledit casque est employé. En effet, le volume occupé par ledit insert 5 au sein d'un tel casque 1 peut être défini, à titre d'exemple non limitatif, en fonction du type de véhicules pour lequel il sera employé. Ce volume pourra également dépendre de la vitesse que peut atteindre un tel véhicule. Si l'on considère la combinaison de la coiffe interne 3 avec l'insert 5 comme un volume global, ledit insert 5 peut préférentiellement mais non limitativement occuper un tiers du volume global, tandis que la coiffe interne 3 peut occuper deux tiers d'un tel volume global. L'invention ne saurait néanmoins être limité à de telles dimensions.

Comme décrit précédemment, un matériau composite constituant l'insert 5 assure sa fonction de diffusion par la destruction de ces moyens pour diffuser tout ou partie de l'énergie cinétique engendrée par un choc. Tout comme les casques dits classiques, lors d'un choc important, ce dernier entraîne l'endommagement irréversible, voire la destruction du casque de moto. Il est ainsi nécessaire de changer le casque pour s'assurer que celui-ci assure toujours sa fonction de protection de la tête d'un utilisateur. Ainsi, en complément, pour attester de la conformité d'un casque de moto selon l'invention, ce dernier peut en outre comprendre des moyens témoins (non représentés sur les figures) de l'intégrité du matériau composite constituant l'insert. Puisque l'insert est généralement enceint entre les calotte externe 2, coiffe interne 3 et/ou rembourrage 4 de confort, de tels moyens permettent d'attester que l'insert n'a pas subi de dommages irrémédiables altérant sa fonctionnalité, bien que l'insert soit hors de portée visuelle.

Selon une première variante, les moyens témoins peuvent comporter une valve de dépression associée à un moyen délivrant une indication perceptible par l'humain. La combinaison d'une valve de dépression couplée à un moyen visuel permet un contrôle rapide d'un casque de moto selon l'invention, pouvant correspondre, à titre d'exemples non limitatifs, à un test établi par un parent lorsqu'il souhaite vérifier le casque de son enfant, ou par les forces de l'ordre lors de contrôle sur la route. Le fonctionnement de cette combinaison est en principe simplifié : lorsque le matériau composite subit un choc important ou lorsque celui-ci est d'ores et déjà endommagé, la valve de dépression, avantageusement composée d'une vanne, s'ouvre pour acheminer un gaz ou un liquide jusqu'au moyen délivrant une indication visuelle, ce dernier comportant avantageusement une substance « réagissant » audit gaz ou liquide. A titre d'exemple non limitatif, un tel moyen délivrant une indication visuelle peut être une pastille colorimétrique, c'est-à-dire qu'une telle pastille peut changer de couleur au contact d'un liquide ou gaz spécifique, ou encore une interface de restitution, éventuellement de taille réduite, permettant l'affichage de lettres ou symboles spécifiques selon l'état d'un casque de moto conforme à l'invention.

En variante ou en complément, les moyens témoins comportent une substance radio opaque : une telle substance radio opaque permet d'effectuer un contrôle détaillé de l'insert au sein d'un casque de moto conforme à l'invention. En effet, il peut être prévu, avantageusement mais non limitativement, que ladite substance radio opaque soit contenu directement au sein de la matière constituant le réseau d'éléments de base. La radio-opacité est la propriété que possède une substance à ne pas laisser pénétrer certains types de rayons, plus particulièrement les rayons X. Lors d'une analyse aux rayons X, seule la substance radio-opaque sera visible, permettant ainsi de vérifier l'état de l'insert et par conséquent d'un casque de moto conforme à l'invention. L'emploi d'une telle substance peut notamment se révéler très utile lors du contrôle qualité des casques de moto à la fin des processus de fabrication.

L'invention a été décrite lors de son utilisation en tant qu'insert pour un dispositif de protection tel qu'un casque de moto. Elle peut également être mise en œuvre pour tous types d'éléments de protection individuels, tels que les casques de voiture ou de sport à risques, genouillères, protège-tibias, protèges-coudes... etc. ou éléments de protection passive des moyens de locomotion, tels que les pare-chocs de voiture ou de camion

Il pourrait également être envisagé qu'une pluralité d'inserts comprenant le matériau composite soit associée en série ou en parallèle pour améliorer l'efficacité de la protection.

## Revendications

1. Matériau composite (5'), comportant une couche supérieure (6) et une couche inférieure (7), ledit matériau composite (5') étant **caractérisé en ce qu'**il comprend des moyens (8) consistant en un réseau (8') d'éléments de bases assemblés entre eux formant des cavités, lesdits éléments étant agencés pour rompre sous l'effet de l'énergie cinétique (E_{c}) induite par un impact (C) asséné sur l'une desdites couches (6,7), lesdits moyens (8) coopérant de part et d'autre avec la couche supérieure (6) et la couche inférieure (7).

2. Matériau composite (5') selon la revendication précédente, pour lequel la couche supérieure (6) et la couche inférieure (7) forment une seule et même entité, enceignant les moyens (8) pour diffuser.

3. Matériau composite (5') selon les revendications 1 ou 2, pour lequel l'agencement du réseau (8') d'éléments de base est régulier, les éléments de base étant identiques.

4. Matériau composite (5') selon les revendications 1 ou 2, pour lequel l'agencement du réseau (8') d'éléments de base est aléatoire.

5. Matériau composite (5') selon l'une quelconque des revendications 1 à 4, pour lequel le réseau (8') d'éléments de base comporte au moins un bâtonnet.

6. Matériau composite (5') selon l'une quelconque des revendications 1 à 5, pour lequel le réseau (8') d'éléments de base comporte au moins une alvéole.

7. Matériau composite (5') selon l'une quelconque des revendications 1 à 6, pour lequel la couche supérieure, la couche inférieure et le réseau d'éléments de base sont constitués en une même matière.

8. Matériau composite (5') selon l'une quelconque des revendications 1 à 7, pour lequel les moyens (8) pour diffuser comporte en outre un fluide s'écoulant au sein des cavités du réseau.

9. Matériau composite (5') selon la revendication 8, pour lequel le fluide est constitué principalement d'un gel.

10. Matériau composite (5') selon l'une quelconque des revendications 8 ou 9, pour lequel le fluide occupe trente à soixante pourcents de l'espace formé par les cavités.

11. Procédé de fabrication d'un matériau composite (5') conforme à l'une quelconque des revendications 1 à 10, **caractérisé en ce qu'**il comprend une étape d'extrusion du réseau (8') d'éléments de bases et de cavités.

12. Dispositif de protection, comprenant un insert, ledit dispositif étant **caractérisé en ce que** ledit insert est constitué en un matériau composite (5') selon l'une quelconque des revendications 1 à 10.

13. Dispositif de protection selon la revendication 12, comprenant en outre des moyens témoins de l'intégrité du matériau composite (5') constituant l'insert (5).

14. Dispositif de protection selon la revendication 13, pour lequel les moyens témoins comportent une valve de dépression associée à un moyen délivrant une indication perceptible par l'humain.

15. Dispositif de protection selon la revendication 13, pour lequel les moyens témoins comportent une substance radio opaque.

16. Dispositif de protection selon l'une quelconque des revendications 12 à 15, consistant en un casque de moto (1), comportant une calotte externe (2), une coiffe interne (3) positionnée entre ladite calotte externe (2) et un rembourrage de confort (4), ledit casque de moto (1) étant **caractérisé en ce qu'**il comporte un insert (5) constitué en un matériau composite (5') selon l'une quelconque des revendications 1 à 11, ledit insert (5) étant positionné entre la calotte externe (2) et la coiffe interne (3).

## Patentansprüche

1. Verbundmaterial (5') mit einer oberen Schicht (6) und einer unteren Schicht (7), wobei das genannte Verbundmaterial (5') **dadurch gekennzeichnet ist, dass** es Mittel (8) umfasst, die aus einem Netzwerk (8') von zusammengesetzten Basiselementen bestehen, die Hohlräume bilden, wobei die genannten Elemente so ausgelegt sind, dass sie unter der Wirkung der kinetischen Energie (E_{c}) brechen, die durch einen auf eine der genannten Schichten (6, 7) ausgeübten Stoß (C) induziert wird, wobei die genannten Mittel (8) auf beiden Seiten mit der oberen Schicht (6) und der unteren Schicht (7) zusammenwirken.

2. Verbundmaterial (5') nach dem vorherigen Anspruch, bei dem die obere Schicht (6) und die untere Schicht (7) eine einzige Einheit bilden, die die Ausbreitungsmittel (8) einschließt.

3. Verbundmaterial (5') nach Anspruch 1 oder 2, bei dem die Anordnung des Netzwerks (8') von Basiselementen regelmäßig ist, wobei die Basiselemente identisch sind.

4. Verbundmaterial (5') nach Anspruch 1 oder 2, bei dem die Anordnung des Netzwerks (8') von Basiselementen zufällig ist.

5. Verbundmaterial (5') nach einem der Ansprüche 1 bis 4, bei dem das Netzwerk (8') von Basiselementen mindestens ein Stäbchen aufweist.

6. Verbundmaterial (5') nach einem der Ansprüche 1 bis 5, bei dem das Netzwerk (8') von Basiselementen mindestens eine Zelle aufweist.

7. Verbundmaterial (5') nach einem der Ansprüche 1 bis 6, bei dem die obere Schicht, die untere Schicht und das Netzwerk von Basiselementen aus demselben Material bestehen.

8. Verbundmaterial (5') nach einem der Ansprüche 1 bis 7, bei dem die Ausbreitungsmittel (8) ferner ein Fluid umfassen, das innerhalb der Hohlräume des Netzwerks fließt.

9. Verbundmaterial (5') nach Anspruch 8, bei dem das Fluid hauptsächlich aus einem Gel besteht.

10. Verbundmaterial (5') nach Anspruch 8 oder 9, bei dem das Fluid dreißig bis sechzig Prozent des von den Hohlräumen gebildeten Raums einnimmt.

11. Verfahren zur Herstellung eines Verbundmaterials (5') nach einem der Ansprüche 1 bis 10, **dadurch gekennzeichnet, dass** es einen Schritt des Extrudierens des Netzwerks (8') von Basiselementen und Hohlräumen beinhaltet.

12. Schutzvorrichtung, die einen Einsatz umfasst, wobei die genannte Vorrichtung **dadurch gekennzeichnet ist, dass** der genannte Einsatz aus einem Verbundmaterial (5') nach einem der Ansprüche 1 bis 10 besteht.

13. Schutzvorrichtung nach Anspruch 12, die ferner Mittel zum Anzeigen der Integrität des Verbundmaterials (5'), aus dem der Einsatz (5) besteht, umfasst.

14. Schutzvorrichtung nach Anspruch 13, bei der die Anzeigemittel ein Unterdruckventil umfassen, das mit einem Mittel verbunden ist, das eine für den Menschen wahrnehmbare Anzeige liefert.

15. Schutzvorrichtung nach Anspruch 13, bei der die Anzeigemittel eine radioopake Substanz umfassen.

16. Schutzvorrichtung nach einem der Ansprüche 12 bis 15, die aus einem Motorradhelm (1) besteht, der eine Außenschale (2) und eine zwischen der genannten Außenschale (2) und einer Komfortpolsterung (4) positionierte Innenkappe (3) umfasst, wobei der Motorradhelm (1) **dadurch gekennzeichnet ist, dass** er einen Einsatz (5) umfasst, der aus einem Verbundmaterial (5') nach einem der Ansprüche 1 bis 11 besteht, wobei der genannte Einsatz (5) zwischen der Außenschale (2) und der Innenkappe (3) positioniert ist.

## Claims

1. Composite material (5'), comprising an upper layer (6) and a lower layer (7), said composite material (5') being **characterized in that** it comprises means (8) consisting of a network (8') of interassembled base elements forming cavities, said elements being arranged to break under the effect of the kinetic energy (E_{c}) resulting from an impact (C) exerted on one of said layers (6,7), said means (8) cooperating on both sides with the upper layer (6) and the lower layer (7).

2. Composite material (5') according to the preceding claim, for which the upper layer (6) and the lower layer (7) form one and the same entity, surrounding the diffusion means (8) .

3. Composite material (5') according to claims 1 or 2, for which the arrangement of the network (8') of base elements is regular, the base elements being identical.

4. Composite material (5') according to claims 1 or 2, for which the arrangement of the network (8') of base elements is random.

5. Composite material (5') according to any one of claims 1 to 4, for which the network (8') of base elements comprises at least one rod.

6. Composite material (5') according to any one of claims 1 to 5, for which the network (8') of base elements comprises at least one cell.

7. Composite material (5') according to any one of claims 1 to 6, for which the upper layer, the lower layer and the network of base elements are constituted by the same material.

8. Composite material (5') according to any one of claims 1 to 7, for which the diffusion means (8) further comprise a fluid flowing within the cavities of the network.

9. Composite material (5') according to claim 8, for which the fluid is mainly constituted by a gel.

10. Composite material (5') according to any one of claims 8 or 9, for which the fluid occupies thirty to sixty percent of the space formed by the cavities.

11. Method for manufacturing a composite material (5') according to any one of claims 1 to 10, **characterized in that** it comprises a step of extrusion of the network (8') of base elements and cavities.

12. Protection device, comprising an insert, said device being **characterized in that** said insert is constituted by a composite material (5') according to any one of claims 1 to 10.

13. Protection device according to claim 12, further comprising means indicating the integrity of the composite material (5') constituting the insert (5).

14. Protection device according to claim 13, for which the indicating means comprise a vacuum valve linked to a means delivering an indication perceptible to humans.

15. Protection device according to claim 13, for which the indicating means comprise a radio-opaque substance.

16. Protection device according to any one of claims 12 to 15, consisting of a motorcycle helmet (1), comprising an outer shell (2) and an inner liner (3) positioned between said outer shell (2) and a comfort padding (4), said motorcycle helmet (1) being **characterized in that** it comprises an insert (5) constituted by a composite material (5') according to any one of claims 1 to 11, said insert (5) being positioned between the outer shell (2) and the inner liner (3).
